(19) 

**Europäisches Patentamt**

**European Patent Office**

**Office européen des brevets**

(11) **EP 4 708 836 A1**

(12) **EUROPEAN PATENT APPLICATION**

(43) Date of publication:
**11.03.2026 Bulletin 2026/11**

(21) Application number: **25194496.3**

(22) Date of filing: **07.08.2025**

(51) International Patent Classification (IPC):
*H04M 9/08* *(2006.01)*

(52) Cooperative Patent Classification (CPC):
**H04M 9/082**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.08.2024 FI 20246042**

(71) Applicant: **Nokia Technologies Oy
02610 Espoo (FI)**

(72) Inventors:
- **LANNEER, Wouter
  Antwerp (BE)**
- **NUZMAN, Carl
  Union (US)**

(74) Representative: **Nokia EPO representatives
Nokia Technologies Oy
Karakaari 7
02610 Espoo (FI)**

(54) **ACOUSTIC ECHO CANCELLATION BASED ON ONE OR MORE DIAGONALLY REGULARIZED CORRELATION MATRICES, AND RELATED DEVICES, METHODS AND COMPUTER PROGRAMS**

(57)     Devices, methods and computer programs for acoustic echo cancellation (AEC) based on one or more diagonally regularized correlation matrices are disclosed. At least some example embodiments may allow a smart and efficient solution for multi-channel and/or stereo AEC, providing improved performance and ease of implementation.

FIG. 3

**Description**

**TECHNICAL FIELD**

The disclosure relates generally to digital signal processing and, more particularly but not exclusively, to acoustic echo cancellation based on one or more diagonally regularized correlation matrices, as well as related devices, methods and computer programs.

**BACKGROUND**

Herein, the term "acoustic echo cancellation" (AEC) refers to techniques used to improve audio quality, such as voice quality, by removing or at least reducing echoes, reverberation, unwanted added sounds, and/or the like, from an audio signal, such as a voice signal, via reliance on the presence of a reference signal.

Recently, enabling spatial audio communication and teleconferencing on mobile devices has been under development. When utilizing these devices in integrated hands-free (IHF) mode, i.e., playing back audio with the built-in speakers of the devices, multi-channel acoustic echo cancellation (MCAEC) may be utilized for making this communication scenario possible. This means cancelling acoustic echoes from more than one speaker on the device in the signal (s) recorded by the internal microphone(s) of the device. To perform AEC for multiple speakers, there is a need for an adaptive filter that can handle multiple speaker signals. A typical case has stereo playback, so there are two speaker signals (the "reference signals") that need to be cancelled. Current mobile devices typically have two independent playback channels.

Because acoustic echo impulse responses can be long (e.g., 0.2 seconds) compared with a sampling rate of modern, high quality audio systems (e.g., 48 kHz), time-domain filter implementations may have high complexity (e.g., requiring thousands of taps). For this reason, AEC filters are usually implemented via frequency-domain techniques, such as filter banks and weighted overlap-add (WOLA), which may take advantage of the low complexity of the fast Fourier Transform. In such implementations, multiple adaptive filters may be applied to every frequency bin in parallel.

However, practical implementations of AEC solutions for spatial audio communication and teleconferencing on mobile devices may be very challenging at least in some situations.

Accordingly, at least in some situations, it may be beneficial to be able to enhance or improve AEC techniques, such as multi-channel and/or stereo AEC.

**BRIEF SUMMARY**

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a user device comprises at least one processor, at least one memory, at least one microphone, and at least one speaker. The at least one memory stores instructions that, when executed by the at least one processor, cause the user device at least to obtain a microphone signal captured by the at least one microphone. The microphone signal is based on one or more near-end signals and one or more playback signals reproduced by the at least one speaker. The instructions, when executed by the at least one processor, further cause the user device at least to obtain one or more subband signal sequences based on the one or more playback signals. The instructions, when executed by the at least one processor, further cause the user device at least to process the obtained one or more subband signal sequences with one or more subband adaptive filters. A subband adaptive filter of the one or more subband adaptive filters is obtained via iteratively determining a gain vector and generating updated filter coefficients, such that filter coefficients of the sub-band adaptive filter at a current iteration time step are obtained via determining the gain vector and adding a product of the determined gain vector with a complex conjugate of an error value to filter coefficients of the subband adaptive filter obtained at a previous iteration time step. The instructions, when executed by the at least one processor, further cause the user device at least to reduce an echo in the obtained microphone signal via using one or more outputs from the one or more subband adaptive filters. The determining of the gain vector is based on dividing an element of a reference vector associated with a reference signal by a corresponding element of a vector of regularized reference power levels of the reference signal.

In an example embodiment, alternatively or in addition to the above-described example embodiments, the vector of regularized reference power levels is based on a weighted average of power levels of one or more reference signals from one or more previous time steps.

In an example embodiment, alternatively or in addition to the above-described example embodiments, the vector of regularized reference power levels is based on adding a positive value to a weighted average of power levels of one or more reference signals from one or more previous time steps.

In an example embodiment, alternatively or in addition to the above-described example embodiments, the determining of the gain vector comprises determining a weighted correlation matrix between reference vectors from one or more previous time steps. The weighted correlation matrix is obtained via dividing an element of the reference vectors from the one or more previous time steps by a corresponding element of the vector of regularized reference power levels.

In an example embodiment, alternatively or in addition to the above-described example embodiments, the determining of the gain vector further comprises determining a regularized inverse of the weighted correlation matrix.

In an example embodiment, alternatively or in addition to the above-described example embodiments, the reducing of the echo in the obtained microphone signal comprises obtaining a second error by multiplying a first error by a gain derived from an inner product of the gain vector and the reference vector.

In an example embodiment, alternatively or in addition to the above-described example embodiments, a first element of the vector of regularized reference power levels differs from a second element of the vector of regularized reference power levels.

In an example embodiment, alternatively or in addition to the above-described example embodiments, the reference signal is based on at least one playback signal of the one or more playback signals.

An example embodiment of a method comprises obtaining, by an apparatus, a microphone signal captured by at least one microphone comprised in the user device. The microphone signal is based on one or more near-end signals and one or more playback signals reproduced by at least one speaker comprised in the user device. The method further comprises obtaining, by the apparatus, one or more subband signal sequences based on the one or more playback signals. The method further comprises processing, by the apparatus, the obtained one or more subband signal sequences with one or more subband adaptive filters. A subband adaptive filter of the one or more subband adaptive filters is obtained via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step. The method further comprises reducing, by the apparatus, an echo in the obtained microphone signal via using one or more outputs from the one or more subband adaptive filters. The determining of the gain vector is based on dividing an element of a reference vector associated with a reference signal by a corresponding element of a vector of regularized reference power levels of the reference signal.

An example embodiment of an apparatus comprises means for carrying out a method according to any of the above-described example embodiments.

An example embodiment of a computer program comprises instructions for causing a user device to perform at least the following: obtaining a microphone signal captured by at least one microphone comprised in the user device, the microphone signal being based on one or more near-end signals and one or more playback signals reproduced by at least one speaker comprised in the user device; obtaining one or more subband signal sequences based on the one or more playback signals; processing the obtained one or more subband signal sequences with one or more subband adaptive filters, wherein a subband adaptive filter of the one or more subband adaptive filters is obtained via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step; and reducing an echo in the obtained microphone signal via using one or more outputs from the one or more subband adaptive filters, wherein the determining of the gain vector is based on dividing an element of a reference vector associated with a reference signal by a corresponding element of a vector of regularized reference power levels of the reference signal.

## DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:

**FIG. 1** shows an example embodiment of the subject matter described herein illustrating an example system, where various embodiments of the present disclosure may be implemented;

**FIG. 2** shows an example embodiment of the subject matter described herein illustrating a user device, where various embodiments of the present disclosure may be implemented;

**FIG. 3** shows an example embodiment of the subject matter described herein illustrating a method for the user device; and

**FIG. 4** shows an example embodiment of the subject matter described herein illustrating an implementation of the disclosure.

Like reference numerals are used to designate like parts in the accompanying drawings.

## DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

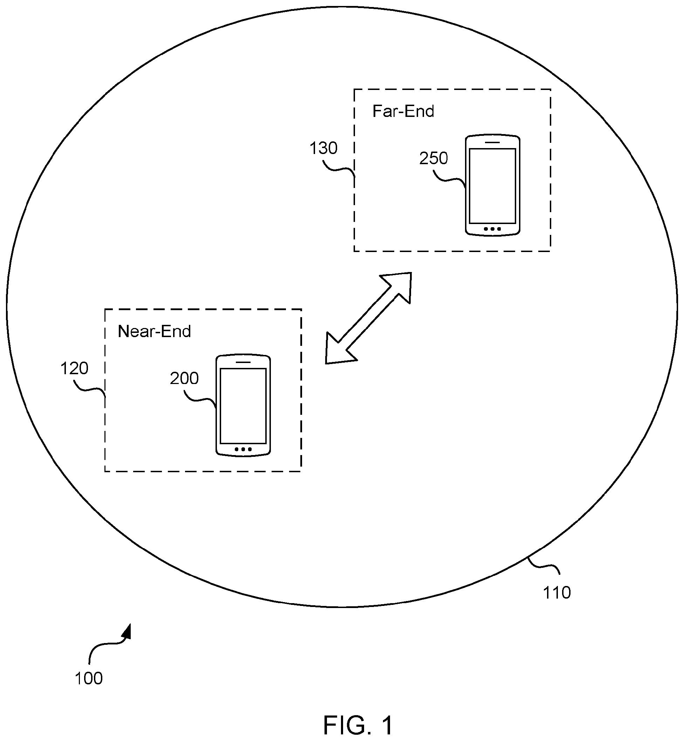

Fig. 1 illustrates example system 100, where various embodiments of the present disclosure may be implemented. System 100 may comprise one or more cellular communication protocols, e.g., a fifth generation (5G) or sixth generation (6G) network or a network beyond 6G wireless networks, 110. Alternatively or additionally, the system 100 may comprise means for a short range wireless communication network, for example, wireless local area network (WLAN) or Bluetooth®. Further, the system may comprise a wired or fiber optic communication network. An example representation of system 100 is shown depicting a user device 200 and a user device 250 communicating with each other, e.g., to provide audio communication, for example, a spatial audio communication and/or teleconferencing service. The user device 200 is in a first location 120 (e.g., a first room) and the user device 250 is in a second location 130 (e.g., a second room). Since the disclosure is from the point of view of the user device 200, the first location 120 may be referred to as a near-end, and the second location 130 may be referred to as a far-end.

The user device 200 (and the user device 250) may comprise, e.g., a mobile communication device, a mobile phone, a smartphone, a tablet computer, a smart watch, smart glasses, a smart audio headset, an AR/VR/XR (augmented reality, virtual reality, extended reality) device, any hand-held, portable and/or wearable device, a television, a vehicle infotainment unit, or any combination thereof. User device 200 may also be referred to as a user equipment (UE).

In the following, various example embodiments will be discussed. At least some of these example embodiments described herein may allow enhancing multi-channel and/or stereo AEC using adaptive filters. At least some of these example embodiments provides an approach called diagonal inverse correlation matrix approximation, which ensures robust and computationally efficient AEC operation regardless of conditioning of a stereo playback signal.

Furthermore, at least some of the example embodiments described herein allows achieving significantly lower central processing unit (CPU) usage. This improvement in computational efficiency contributes to a better user experience by reducing battery consumption and device heating.

Furthermore, at least some of the example embodiments described herein may not require parameter tuning, thus working "out of the box".

Furthermore, at least some of the example embodiments described herein may exhibit robustness against stereo playback and dynamic changes in the echo path, making it suitable for various real-world scenarios.

Thus, at least some of the example embodiments described herein allows a smart and efficient solution for multi-channel and/or stereo AEC, providing improved performance and ease of implementation.

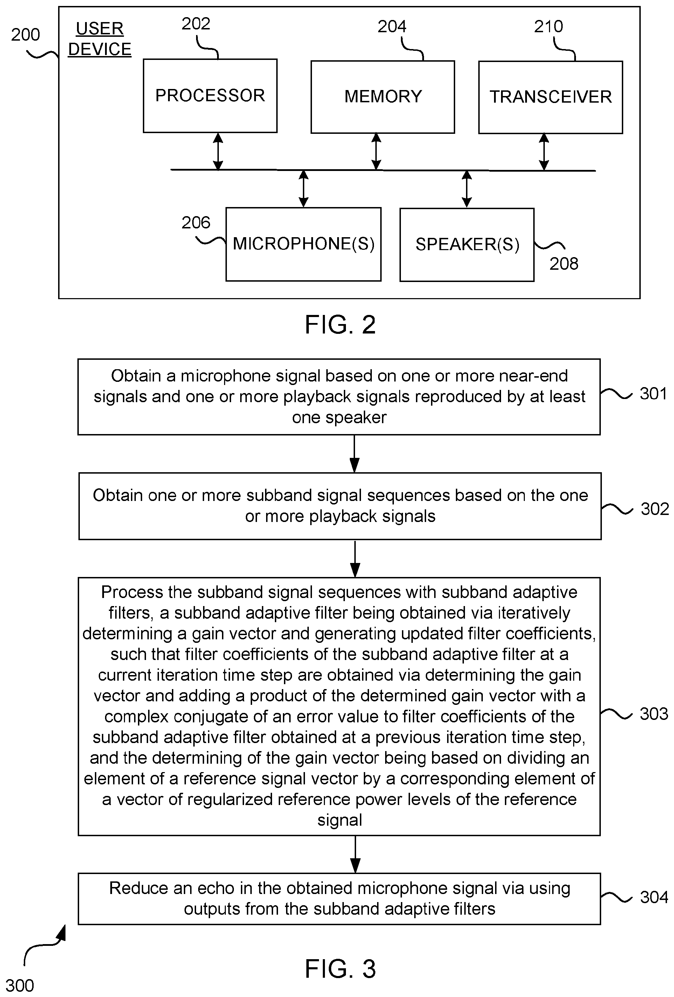

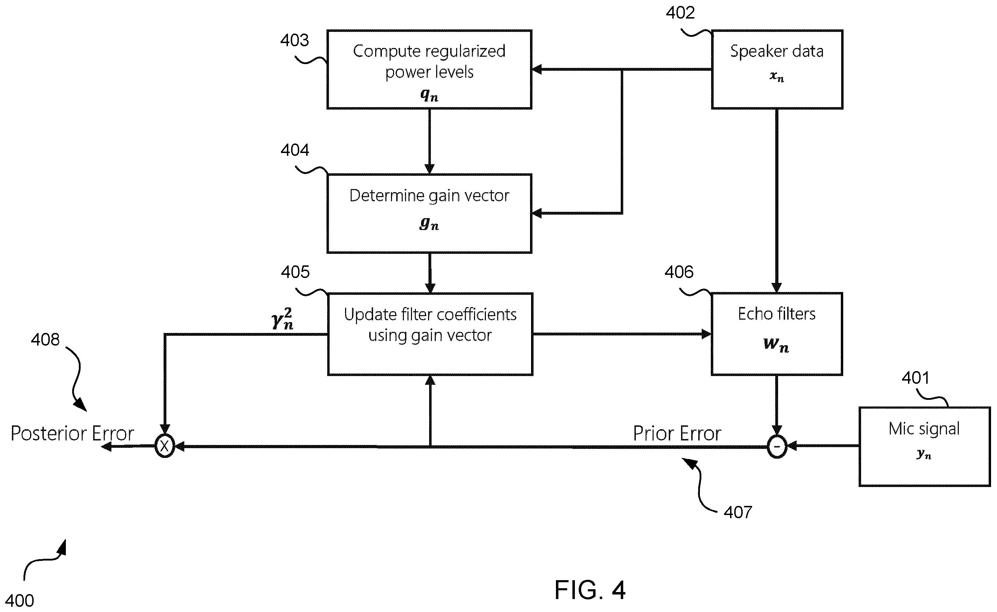

Fig. 2 is a block diagram of the user device 200, in accordance with an example embodiment, and a diagram 400 of Fig. 4 illustrates an example implementation of the disclosure that may be carried out by user device 200 of Fig. 2.

The user device 200 comprises one or more processors 202, one or more memories 204 that comprise computer program code or instructions, one or more microphones 206, and one or more speakers 208. The user device 200 may also include other elements, such as one or more transceivers 210 configured to enable the user device 200 to transmit and/or receive information to/from other devices, as well as other elements not shown in the Fig. 2. In one example, the user device 200 may use the transceiver 210 to transmit or receive signalling information and data in accordance with at least one cellular communication protocol. The transceiver 210 may be configured to provide at least one wireless radio connection, such as for example a 3GPP (3rd Generation Partnership Project) mobile broadband connection (e.g., 5G or 6G). The transceiver 210 may comprise, or be configured to be coupled to, at least one antenna to transmit and/or receive radio frequency signals.

Although the user device 200 is depicted to include only one processor 202, the user device 200 may include more processors. In an embodiment, the memory 204 is capable of storing instructions, such as an operating system and/or various applications. Furthermore, the memory 204 may include a storage that may be used to store, e.g., at least some of the information and data used in the disclosed embodiments.

Furthermore, the processor 202 is capable of executing the stored instructions or code. In an embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like, or any combination thereof. In an embodiment, the processor 202 may be configured to execute hard-coded functionality. In an embodiment, the processor 202 is embodied as an executor of software instructions, wherein the instructions may configure the processor 202 to perform the algorithms and/or operations described herein when the instructions are executed.

The memory 204 may be embodied as one or more volatile memory devices, one or more non-volatile memory devices, and/or a combination of one or more volatile memory devices and non-volatile memory devices. For example, the memory 204 may be embodied as semiconductor memories (such ROM (read-only memory), as mask ROM, PROM (programmable ROM), EPROM (erasable PROM), flash ROM, RAM (random access memory), etc.

In the following, q denotes a signal power vector, g denotes a gain vector, $y_n$ denotes a microphone signal at frame n, $X_n = [x_n^1, \ldots, x_n^L]$ denotes a reference or input vector of length L, $W_n = [w_n^1, \ldots, w_n^L]$ denotes an echo filter of L taps at frame n, $e_n$ denotes a prior error signal, $e_n^{post}$ denotes a posterior error signal, $C_n$ denotes an inverse correlation matrix at n, $\lambda$ denotes an exponential weighting (also known as a forgetting factor), v denotes a vector of intermediate computation results, and $P \geq 1$ denotes a memory order, for every frequency bin. When there are multiple speakers 208, the reference input vector $x_n$ may be formed by concatenating reference vectors corresponding to different speakers 208. When there are multiple microphones 206, the user device 200 may apply the disclosure independently to each microphone signal, to obtain a different adaptive filter suitable for cancelling echo from each microphone signal.

In a general case (with full computation for $P > 1$), at least some of the following equations may apply for the adaptive filter:

At first (e.g., in initialization at start-up): $q_0 = 0_L$; and $w_0 = 0_L$.

For every frame n=1,2,…,:

$$e_n = y_n - w_{n-1}^H x_n;$$

$$q_{n,P}[l] = \lambda^P |x_{n-P,}[l]|^2 + \lambda\, q_{n-1,P}[l] \quad \text{(if } n \geq P\text{), for each } 1 \leq l \leq L;$$

$$Q_{n-1,P-1} = \text{diag}(q_{n-1,P-1}) + \epsilon I;$$

$$v_n = Q_{n-1,P-1}^{-1} x_n - Q_{n-1,P-1}^{-1} X_{n-1,P-1} \left( X_{n-1,P-1}^H Q_{n-1,P-1}^{-1} X_{n-1,P-1} + \Lambda_{P-1}^{-1} \right)^{-1} X_{n-1,P-1}^H Q_{n-1,P-1}^{-1} x_n ;$$

$$\delta_n^2 = v_n^H x_n + \lambda ;$$

$$g_n = \frac{1}{\delta_n^2} v_n ;$$

$$\gamma_n^2 = \frac{\lambda}{\delta_n^2} ;$$

$$w_n = w_{n-1} + g_n e_n^* ; \text{ and}$$

$$e_n^{post} = \gamma_n^2 e_n .$$

When $P = 1$, the above simplifies to:

At first: $q_0 = 0_L$; and

$$w_0 = 0_L .$$

For every frame n=1,2,..., :

$$e_n = y_n - w_{n-1}^H x_n ;$$

$$q_{n,0}[l] = \lambda |x_{n-1}[l]|^2 + \lambda \, q_{n-1,0}[l] \qquad \text{(if } n \geq 1\text{), for each } 1 \leq l \leq L ;$$

$$Q_{n-1,0} = \mathrm{diag}\big(q_{n-1,0}\big) + \epsilon I ;$$

$$v_n = Q_{n-1,0}^{-1} x_n ;$$

$$\delta_n^2 = v_n^H x_n + \lambda ;$$

$$g_n = \frac{1}{\delta_n^2} v_n ;$$

$$\gamma_n^2 = \frac{\lambda}{\delta_n^2} \; ;$$

$$w_n = w_{n-1} + g_n e_n^* ; \text{ and}$$

$$e_n^{post} = \gamma_n^2 e_n .$$

When executed by at least one processor 202, instructions stored in at least one memory 204 cause the user device 200 at least to obtain a microphone signal 401 captured by at least one microphone 206. The microphone signal can comprise, for example, audio, voice, speech, music, sound, noise, etc., or any combination thereof. The microphone signal 401 is based on one or more near-end signals and one or more playback signals reproduced by at least one speaker 208.

The instructions, when executed by at least one processor 202, further cause the user device 200 at least to obtain one or more subband signal sequences based on the one or more playback signals, e.g., via a time-frequency transformation (such as a Short-Time Fourier Transform or a WOLA method). A full time-domain implementation corresponds to the case of one singular sub-band.

The instructions, when executed by at least one processor 202, further cause the user device 200 at least to process the obtained one or more subband signal sequences with one or more subband adaptive filters.

A subband adaptive filter of the one or more subband adaptive filters is obtained via iteratively determining a gain vector $g_n$ (block 404) and generating updated filter coefficients $w_n$ (blocks 405-406), e.g., of each subband adaptive filter, such that filter coefficients of the subband adaptive filter at a current iteration time step are obtained via determining the gain vector and adding a product of the determined gain vector with a complex conjugate of an error value (e.g., prior error 407) to filter coefficients of the subband adaptive filter obtained at a previous iteration time step, e.g., such that $w_n = w_{n-1} + g_n e_n^*$. The determining of the gain vector $g_n$ is based on dividing an element of a reference vector $x_n$ (block 402) associated with a reference signal by a corresponding element of a vector of regularized reference power levels $q_n$ (block 403) of the reference signal, e.g., such that $v_n = Q_{n-1,0}^{-1} x_n$ or such that $v_n$ is based on the computation $Q_{n-1,P-1}^{-1} x_n$.

At least in some embodiments, the reference signal may be based on at least one playback signal of the one or more playback signals (in the subband domain). For example, the reference signal may be equal to the playback signal, or the reference signal may be equal to, e.g., the playback signal divided by a square root of a noise power estimate based on e.g., prior error information (for improved noise robustness).

It is to be noted that, when referring to audio signals, the term "power" may mean instantaneous power or average power. The instantaneous power of a signal $x_n$ at a time $n$ may refer to a squared magnitude of the signal, $|x_n|^2$. The average power of a signal may refer to a weighted sum of the squared magnitudes of the signal at multiple times. For example, it may refer to an exponentially weighted average, such as $\sum_{i=0}^{n} \lambda^i |x_{n-i}|^2$. However, other than the squared magnitude, also compressed magnitudes may be used, e.g., $|x_n|^a$ with $0 < a \leq 2$.

It is to be further noted that, when referring to real values, a complex conjugate of a real value is the same as the real value. Likewise, a Hermitian transpose of a real vector is the same as a transpose of the real vector. Accordingly, the multiplying of the gain vector by the complex conjugate of an error value is to be understood as multiplying the gain vector by the error value, whenever the error values is a real value.

The instructions, when executed by at least one processor 202, further cause the user device 200 at least to reduce an echo in the obtained microphone signal 401 via using one or more outputs from the one or more subband adaptive filters.

At least in some embodiments, the vector of regularized reference power levels may be based on a weighted average of power levels of one or more reference signals from one or more previous time steps, e.g., such that $q_{n,P}[l] = \lambda^P |x_{n-P}[l]|^2 + \lambda q_{n-1,P}[l]$, or $q_n P[l] = \alpha_1 |x_{n-P}[l]|^2 + \cdots + \alpha_K |x_{n-K+1-P}[l]|^2$.

At least in some embodiments, the vector of regularized reference power levels may be based on adding a positive value to the weighted average of power levels of one or more reference signals from one or more previous time steps, e.g., such that $Q_{n-1,P-1} = \mathrm{diag}(q_{n-1,P-1}) + \varepsilon I$. At least in some embodiments, the positive value may be different for every element of the vector of regularized reference power levels, e.g., such that $Q_{n-1,P-1} = \mathrm{diag}(q_{n-1,P-1} + \varepsilon)$ and such that $\varepsilon$ is a vector of positive values.

At least in some embodiments, the determining 404 of the gain vector may comprise determining a weighted correlation matrix $X_{n-1,P-1}^H Q_{n-1,p-1}^{-1} X_{n-1,P-1}$ between reference vectors from one or more previous time steps $X_{n-1,P-1}$. The weighted correlation matrix may be obtained via dividing an element of the reference vectors from the one or more previous time steps by a corresponding element of the vector of regularized reference power levels, e.g., via a computation $Q_{n-1,p-1}^{-1} X_{n-1,P-1}$.

At least in some embodiments, determining 404 of the gain vector may further comprise determining a regularized inverse of the weighted correlation matrix, e.g., determining the matrix $\left( X_{n-1,P-1}^H Q_{n-1,p-1}^{-1} X_{n-1,P-1} + \Lambda_{P-1}^{-1} \right)^{-1}$.

At least in some embodiments, the reducing of the echo in the obtained microphone signal 401 may comprise obtaining a second error (e.g., a posterior error 408) by multiplying a first error (e.g., prior error 407) by a gain derived from an inner product of the gain vector and the reference vector.

At least in some embodiments, a first element of the vector of regularized reference power levels may differ from a second element of the vector of regularized reference power levels.

In the following, implementation examples are discussed in more detail.

In the following, $P \geq 1$.

As discussed above, the microphone signal 401 may be received based on the one or more near-end signals and the one or more playback signals reproduced by one or more speakers 208, the set of one or more subband signal sequences may be obtained based on the one or more playback signals, and the echo in the microphone signal may be reduced using the adaptive filter outputs.

The sub-band adaptive filter discussed above may be an efficient way to perform the following calculations based on diagonally regularized correlation matrices for every frequency bin:

$$R_n = \sum_{i=0}^{n} \lambda^i x_{n-i} x_{n-i}^H$$

$$r_n = \sum_{i=0}^{n} \lambda^i x_{n-i} y_{n-i}^*$$

$$w_n = R_n^{-1} r_n$$

The filter coefficients $w_n$ (block 406) may minimize a past discounted error metric $\sum_{i=0}^{n} \lambda^i |e_{n-i}|^2$.

The disclosure aims to avoid problems that may arise when the matrix $R_n$ is singular or poorly conditioned.

To achieve this, the disclosure may use a technique to diagonally regularize the matrix inverse ( $R_n^{-1}$ ) that provides the desired robustness to poor conditioning, with significantly reduced complexity.

In the disclosure, a small integer $P$ (smaller than $L$) may be chosen, and the covariance matrix may be split into two terms, such that:

$$R_n = \sum_{i=0}^{P-1} \lambda^i x_{n-i} x_{n-i}^H + \sum_{i=P}^{n} \lambda^i x_{n-i} x_{n-i}^H$$

The second term may be approximated by a diagonal matrix with the same diagonal elements, namely by:

$$Q_{n,P} = diag(q_{n,P}) + \epsilon I,$$

where $\varepsilon$ may be zero or positive and where $q_{n,P}$ may be a vector whose m-th component is an exponential average of the power of the m-th component of the reference signal:

$$q_{n,P}[m] = \sum_{i=P}^{n} \lambda^i |x_{n-i}[m]|^2.$$

This may result in an approximate covariance:

$$\tilde{R}_{n,P} = \sum_{i=0}^{P-1} \lambda^i x_{n-i} x_{n-i}^H + Q_{n,P} = X_{n,P} \Lambda_P X_{n,P}^H + Q_{n,P}$$

where $X_{n,P} = [x_n \, x_{n-1} \dots x_{n-P+1}]$ may be a $L \times P$ matrix, and $\Lambda_P$ may be a $P \times P$ diagonal matrix with diagonal entries $1, \lambda, \dots, \lambda^{P-1}$.

The exponentially averaged power vector components may be obtained recursively as:

$$q_{n,P}[m] = \lambda^P |x_{n-P}[n]|^2 + \lambda q_{n-1,P}[m].$$

In the disclosure, the filter coefficients at time $n$ may be obtained as:

$$w_{n,P} = \left(\tilde{R}_{n,P}\right)^{-1} r_n.$$

Since $P \ll L$ was chosen, this update may be expressed with reduced complexity using the Woodbury matrix identity. This may yield the expression:

$$w_{n,P} = Q_{n,P}^{-1} r_n - Q_{n,P}^{-1} X_{n,P} \left(X_{n,P}^H Q_{n,P}^{-1} X_{n,P} + \Lambda_P^{-1}\right)^{-1} X_{n,P}^H Q_{n,P}^{-1} r_n.$$

This approximation may have reduced complexity because it uses a $P \times P$ matrix inverse, instead of an $L \times L$ matrix inverse. The regularization due to the use of $\varepsilon > 0$, as well as the regularization inherent in the approximation $\tilde{R}_n$, may make the approach more robust to ill-conditioned or singular covariance matrices.

With a further approximation, it is possible to derive a still lower complexity update formula that instead uses a $(P-1) \times (P-1)$ matrix inverse. To derive this update formula, it may be noted that:

$$w_n = R_n^{-1} r_n \text{ and } w_{n-1} = R_{n-1}^{-1} r_{n-1}$$

so that

$$w_n - w_{n-1} = (x_n x_n^H + \lambda R_{n-1})^{-1} r_n - w_{n-1}$$

$$= (\lambda^{-1} R_{n-1}^{-1} x_n x_n^H + I)^{-1} \lambda^{-1} R_{n-1}^{-1} (x_n y_n^* + \lambda r_{n-1}) - w_{n-1}$$

$$= (\lambda^{-1} R_{n-1}^{-1} x_n x_n^H + I)^{-1} \lambda^{-1} R_{n-1}^{-1} x_n y_n^* + [(\lambda^{-1} R_{n-1}^{-1} x_n x_n^H + I)^{-1} - I] w_{n-1}$$

$$= (\lambda^{-1} R_{n-1}^{-1} x_n x_n^H + I)^{-1} \lambda^{-1} R_{n-1}^{-1} x_n y_n^* - (\lambda^{-1} R_{n-1}^{-1} x_n x_n^H + I)^{-1} \lambda^{-1} R_{n-1}^{-1} x_n x_n^H w_{n-1}$$

$$= (\lambda^{-1} R_{n-1}^{-1} x_n x_n^H + I)^{-1} \lambda^{-1} R_{n-1}^{-1} x_n e_n^*$$

$$= \lambda^{-1} R_{n-1}^{-1} x_n (\lambda^{-1} x_n^H R_{n-1}^{-1} x_n + 1)^{-1} e_n^*$$

where the last three lines may be derived using the identities $(B + I)^{-1} - I = -(B + I)^{-1}B$ and $(BC + I)^{-1}B = B(CB + I)^{-1}$, respectively. This gives the following incremental formula for a least squares solution in the form of a correction to a previous least squares solution,

$$w_n = w_{n-1} + \frac{R_{n-1}^{-1} x_n e_n^*}{x_n^H R_{n-1}^{-1} x_n + \lambda} = w_{n-1} + g_n e_n^*.$$

where the gain vector $g_n$ may be defined as

$$g_n = \frac{v_n}{v_n^H x_n + \lambda}$$

with $v_n = R_{n-1}^{-1} x_n$ .

Similarly to before, the matrix $R_{n-1}$ may be approximated as $R_{n-1} \approx \tilde{R}_{n-1,P-1} = X_{n-1,P-1} \Lambda_{P-1}^{-1} X_{n-1,P-1}^H + Q_{n-1,P-1}$ for $P > 1$ and as $\tilde{R}_{n-1,0} = Q_{n-1,0}$ for $P = 1$.

When $P = 1$, the auxiliary vector may be computed as $v_n = Q_{n-1,0}^{-1} x_n$ , and in the case $P > 1$, it may be computed as:

$$v_n = Q_{n-1,P-1}^{-1} x_n$$
$$- Q_{n-1,P-1}^{-1} X_{n-1,P-1} \left( X_{n-1,P-1}^H Q_{n-1,P-1}^{-1} X_{n-1,P-1} + \Lambda_{P-1}^{-1} \right)^{-1} X_{n-1,P-1}^H Q_{n-1,P-1}^{-1} x_n$$

These substitutions may result in an adaptive filter update formula:

$$\widehat{w}_n = \widehat{w}_{n-1} + v_n \frac{y_n^* - x_n^H \widehat{w}_{n-1}}{x_n^H v_n + \lambda}.$$

The posterior error 408 may be calculated by scaling prior error 407, since:

$$e_n^{post} = y_n - \widehat{w}_n^H x_n = y_n - \widehat{w}_{n-1}^H x_n - v_n^H x_n \frac{e_n}{v_n^H x_n + \lambda} = \left(1 - \frac{v_n^H x_n}{v_n^H x_n + \lambda}\right) e_n$$

$$= \left(\frac{\lambda}{v_n^H x_n + \lambda}\right) e_n = (1 - g_n^H x_n) e_n.$$

At least some embodiments of the disclosure may allow an inverse correlation matrix based on a diagonally regularized matrix, ensuring that the matrix is always of full rank. This robustness is particularly valuable when dealing with poor multi-channel playback signal conditioning. For instance, when there is a sudden switch to mono playback from stereo loudspeakers during a call, at least some embodiments of the disclosure may remain stable, preventing convergence issues, in contrast with filters adapted by recursive least squared which may have convergence problems. This stability allows for continued operation without the need for a hard reset.

In another example involving a spatial telecommunications call with multiple far-end users and poor stereo signal conditioning, at least some embodiments of the disclosure may demonstrate stable output behaviour while maintaining good performance levels.

At least some embodiments of the disclosure may allow a notable computational advantage. This advantage is evident when the number of filter taps, denoted as L, is much larger than the number of modelled rank-1 correlation terms, denoted as P. For example, P=1 may be useful, as it may exhibit linear complexity in the number of filter taps, L. When comparing the above equations for P = 1 and P > 1, it can be seen that the expression for $v_n$ is simpler in the case P = 1, resulting in a significant complexity advantage. Thus, using this algorithm may lead to significantly lower CPU usage on mobile devices.

Despite the significantly lower computational complexity, the disclosure maintains good performance levels, thus making it an excellent choice for low power/CPU mobile devices.

Fig. 3 illustrates an example flow chart of method 300 for an apparatus (such as the user device) 200, in accordance with an example embodiment.

At an operation 301, the apparatus 200 obtains the microphone signal captured by at least one microphone 206 comprised in the apparatus 200. As described above in more detail, the microphone signal is based on the one or more near-end signals and the one or more playback signals reproduced by at least one speaker 208 comprised in the apparatus 200.

At operation 302, the apparatus 200 obtains the one or more subband signal sequences based on the one or more playback signals.

At operation 303, the apparatus 200 processes the obtained one or more subband signal sequences with the one or more subband adaptive filters. As described above in more detail, a subband adaptive filter of the one or more subband adaptive filters is obtained via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step. The determining of the gain vector is based on dividing an element of the reference vector associated with the reference signal by the corresponding element of the vector of regularized reference power levels of the reference signal.

At operation 304, the apparatus 200 reduces the echo in the obtained microphone signal via using the one or more outputs from the one or more subband adaptive filters.

Embodiments and examples with regard to Fig. 3 may be carried out by the user device 200 of Fig. 2**.** The operations 301-304 may, for example, be carried out by at least one processor 202 and at least one memory 204. Further features of the method 300 directly resulting from the functionalities and parameters of the user device 200 are not repeated here. The method 300 can be carried out by computer program(s) or portions thereof.

Another example of an apparatus suitable for carrying out the embodiments and examples with regard to Fig. 3 comprises means for:

obtaining, at operation 301, a microphone signal captured by at least one microphone comprised in a user device, the microphone signal being based on one or more near-end signals and one or more playback signals reproduced by at least one speaker comprised in the user device;

obtaining, at operation 302, one or more subband signal sequences based on the one or more playback signals;

processing, at operation 303, the obtained one or more subband signal sequences with one or more subband adaptive filters, wherein a subband adaptive filter of the one or more subband adaptive filters is obtained via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step; and

reducing, at operation 304, an echo in the obtained microphone signal via using one or more outputs from the one or more subband adaptive filters,

wherein the determining of the gain vector is based on dividing an element of a reference vector associated with a reference signal by a corresponding element of a vector of regularized reference power levels of the reference signal.

The functionality described herein can be performed, at least in part, by one or more computer program product components such as software components. According to an embodiment, user device 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

As used in this application, the term "circuitry" may refer to one or more or all of the following:

(a) hardware-only circuit implementations (such as implementations in only analog and/or digital circuitry); and
(b) combinations of hardware circuits and software, such as (as applicable):

(i) a combination of analog and/or digital hardware circuit(s) with software/firmware; and
(ii) any portions of hardware processor(s) with software (including digital signal processor(s)), software, and memory(ies) that work together to cause an apparatus, such as a mobile phone or server, to perform various functions); and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. An apparatus (200), comprising means for causing the apparatus to perform at least:

obtaining a microphone signal captured by at least one microphone (206), the microphone signal being based on one or more near-end signals and one or more playback signals reproduced by at least one speaker (208);
obtaining one or more subband signal sequences based on the one or more playback signals;
processing the obtained one or more subband signal sequences with one or more subband adaptive filters, obtaining a subband adaptive filter of the one or more subband adaptive filters via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step; and

reducing an echo in the obtained microphone signal via using one or more outputs from the one or more subband adaptive filters,

wherein the determining of the gain vector is based on dividing an element of a reference vector associated with a reference signal by a corresponding element of a vector of regularized reference power levels of the reference signal.

2. The apparatus (200) according to claim 1, wherein the vector of regularized reference power levels is based on a weighted average of power levels of one or more reference signals from one or more previous time steps.

3. The apparatus (200) according to claim 1, wherein the vector of regularized reference power levels is based on adding a positive value to a weighted average of power levels of one or more reference signals from one or more previous time steps.

4. The apparatus (200) according to any of claims 1 to 3, wherein the determining of the gain vector further comprises means for determining a weighted correlation matrix between reference vectors from one or more previous time steps, the weighted correlation matrix obtained via dividing an element of the reference vectors from the one or more previous time steps by a corresponding element of the vector of regularized reference power levels.

5. The apparatus (200) according to claim 4, wherein the determining of the gain vector further comprises means for determining a regularized inverse of the weighted correlation matrix.

6. The apparatus (200) according to any of claims 1 to 5, wherein the reducing of the echo in the obtained microphone signal further comprises means for obtaining a second error by multiplying a first error by a gain derived from an inner product of the gain vector and the reference vector.

7. The apparatus (200) according to any of claims 1 to 6, wherein a first element of the vector of regularized reference power levels differs from a second element of the vector of regularized reference power levels.

8. The apparatus (200) according to any of claims 1 to 7, wherein the reference signal is based on at least one playback signal of the one or more playback signals.

9. A method (300), comprising:

obtaining (301), by an apparatus (200), a microphone signal captured by at least one microphone (206) comprised in the apparatus (200), the microphone signal being based on one or more near-end signals and one or more playback signals reproduced by at least one speaker (208) comprised in the apparatus (200);

obtaining (302), by the apparatus (200), one or more subband signal sequences based on the one or more playback signals;

processing (303), by the apparatus (200), the obtained one or more subband signal sequences with one or more subband adaptive filters,

obtaining a subband adaptive filter of the one or more subband adaptive filters via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step; and

reducing (304), by the apparatus (200), an echo in the obtained microphone signal via using one or more outputs from the one or more subband adaptive filters,

wherein the determining of the gain vector is based on dividing an element of a reference vector associated with a reference signal by a corresponding element of a vector of regularized reference power levels of the reference signal.

10. The method (300) according to claim 9, wherein the vector of regularized reference power levels is based on a weighted average of power levels of one or more reference signals from one or more previous time steps.

11. The method (300) according to claim 9, wherein the vector of regularized reference power levels is based on adding a positive value to a weighted average of power levels of one or more reference signals from one or more previous time steps.

12. The method (300) according to any of claims 9 to 11, wherein the determining of the gain vector further comprises means for determining a weighted correlation matrix between reference vectors from one or more previous time steps, the weighted correlation matrix obtained via dividing an element of the reference vectors from the one or more previous time steps by a corresponding element of the vector of regularized reference power levels.

13. The method (300) according to claim 9, wherein the determining of the gain vector further comprises means for determining a regularized inverse of the weighted correlation matrix.

14. The method (300) according to any of claims 9 to 13, wherein the reducing of the echo in the obtained microphone signal further comprises means for obtaining a second error by multiplying a first error by a gain derived from an inner product of the gain vector and the reference vector.

15. A computer program comprising instructions for performing at least the following:

obtaining a microphone signal captured by at least one microphone comprised in an apparatus (200), the microphone signal being based on one or more near-end signals and one or more playback signals reproduced by at least one speaker comprised in the apparatus;
obtaining one or more subband signal sequences based on the one or more playback signals;
processing the obtained one or more subband signal sequences with one or more subband adaptive filters,
obtaining a subband adaptive filter of the one or more subband adaptive filters via iteratively determining a gain vector and generating updated filter coefficients, such that filter coefficients of the subband adaptive filter at a current iteration time step are obtained via determining the gain vector and adding a product of the determined gain vector with a complex conjugate of an error value to filter coefficients of the subband adaptive filter obtained at a previous iteration time step; and
reducing an echo in the obtained microphone signal via using one or more outputs from the one or more subband adaptive filters,
wherein the determining of the gain vector is based on dividing an element of a reference vector associated with a reference signal by a corresponding element of a vector of regularized reference power levels of the reference signal.

FIG. 1

200 ⌇

```
┌─────────────────────────────────────────────────────────────────────┐
│ USER              202              204              210               │
│ DEVICE                                                                │
│           ┌──────────────┐  ┌──────────────┐  ┌──────────────┐        │
│           │              │  │              │  │              │        │
│           │  PROCESSOR   │  │   MEMORY     │  │ TRANSCEIVER  │        │
│           │              │  │              │  │              │        │
│           └──────┬───────┘  └──────┬───────┘  └──────┬───────┘        │
│                  ↕                 ↕                 ↕                 │
│     ─────────────┼─────────────────┼─────────────────┼────────        │
│                  ↕                 ↕                                   │
│    206    ┌──────────────┐  ┌──────────────┐                          │
│           │              │  │              │                          │
│           │MICROPHONE(S) │  │  SPEAKER(S)  │                          │
│           │              │  │              │  208                     │
│           └──────────────┘  └──────────────┘                          │
└─────────────────────────────────────────────────────────────────────┘
```

FIG. 2

```
┌────────────────────────────────────────────────────────────┐
│ Obtain a microphone signal based on one or more near-end     │
│ signals and one or more playback signals reproduced by at least│  301
│                    one speaker                               │
└────────────────────────────────────────────────────────────┘
                            ↓
┌────────────────────────────────────────────────────────────┐
│ Obtain one or more subband signal sequences based on the one │  302
│              or more playback signals                        │
└────────────────────────────────────────────────────────────┘
                            ↓
┌────────────────────────────────────────────────────────────┐
│ Process the subband signal sequences with subband adaptive   │
│ filters, a subband adaptive filter being obtained via iteratively│
│ determining a gain vector and generating updated filter coefficients,│
│ such that filter coefficients of the subband adaptive filter at a│
│ current iteration time step are obtained via determining the gain│
│ vector and adding a product of the determined gain vector with a│  303
│ complex conjugate of an error value to filter coefficients of the│
│ subband adaptive filter obtained at a previous iteration time step,│
│ and the determining of the gain vector being based on dividing an│
│ element of a reference signal vector by a corresponding element of│
│ a vector of regularized reference power levels of the reference│
│                       signal                                 │
└────────────────────────────────────────────────────────────┘
                            ↓
┌────────────────────────────────────────────────────────────┐
│ Reduce an echo in the obtained microphone signal via using   │  304
│      outputs from the subband adaptive filters              │
└────────────────────────────────────────────────────────────┘
```

300

FIG. 3

FIG. 4

**Europäisches Patentamt**
**European Patent Office**
**Office européen des brevets**

# EUROPEAN SEARCH REPORT

**Application Number**

EP 25 19 4496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 612 963 A2 (MICROSOFT CORP [US]) 4 January 2006 (2006-01-04) * paragraph [0066] - paragraph [0097] * ----- | 1-15 | INV. H04M9/08 |
| A | EP 1 110 315 B1 (KONINKL PHILIPS ELECTRONICS NV [NL]) 26 March 2008 (2008-03-26) * paragraphs [0020] - [0062] * ----- | 1-15 | |

**TECHNICAL FIELDS SEARCHED (IPC)**

H04M
G10L

The present search report has been drawn up for all claims

| Place of search | Date of completion of the search | Examiner |
|---|---|---|
| The Hague | 16 January 2026 | Sorrentino, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 708 836 A1**

## ANNEX TO THE EUROPEAN SEARCH REPORT
## ON EUROPEAN PATENT APPLICATION NO.

EP 25 19 4496

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | | Publication date | Patent family member(s) | | Publication date |
|---|---|---|---|---|---|
| EP 1612963 | A2 | 04-01-2006 | AT | E414351 T1 | 15-11-2008 |
| | | | CN | 1716381 A | 04-01-2006 |
| | | | EP | 1612963 A2 | 04-01-2006 |
| | | | EP | 2045928 A1 | 08-04-2009 |
| | | | EP | 2045929 A1 | 08-04-2009 |
| | | | ES | 2388573 T3 | 16-10-2012 |
| | | | ES | 2388575 T3 | 16-10-2012 |
| | | | JP | 4955228 B2 | 20-06-2012 |
| | | | JP | 2006018254 A | 19-01-2006 |
| | | | KR | 20060047950 A | 18-05-2006 |
| | | | US | 2006002546 A1 | 05-01-2006 |
| | | | US | 2006002547 A1 | 05-01-2006 |
| EP 1110315 | B1 | 26-03-2008 | CN | 1321358 A | 07-11-2001 |
| | | | DE | 60038432 T2 | 23-04-2009 |
| | | | EP | 1110315 A1 | 27-06-2001 |
| | | | JP | 4700871 B2 | 15-06-2011 |
| | | | JP | 2003503871 A | 28-01-2003 |
| | | | KR | 20010072937 A | 31-07-2001 |
| | | | US | 7058185 B1 | 06-06-2006 |
| | | | WO | 0101571 A1 | 04-01-2001 |

EPO FORM P0459

For more details about this annex : see Official Journal of the European Patent Office, No. 12/82